# EUROPEAN PATENT APPLICATION

(11) **EP 2 594 369 A2**
(43) Date of publication of application: **22.05.2013**
(21) Application number: 12192695.0
(22) Date of filing: 15.11.2012
(51) Int. Cl.: B25F 5/00

(54) **Electric power tool**

(30) Priority: 15.11.2011 JP 2011249749
(71) Applicant: Panasonic Corporation, Kadoma-shi Osaka 571-8501 (JP)
(72) Inventor: Takeyama, Atusi, Chuo-ku, Osaka 540-6207 (JP); Matsumoto, Hiroshi, Chuo-ku, Osaka 540-6207 (JP); Tujimura, Manabu, Chuo-ku, Osaka 540-6207 (JP); Yoshimoto, Kanji, Chuo-ku, Osaka 540-6207 (JP); Sakae, Junji, Chuo-ku, Osaka 540-6207 (JP); Watanabe, Masayoshi, Chuo-ku, Osaka 540-6207 (JP)
(74) Representative: Appelt, Christian W.

(57) **Abstract**

An electric power tool includes a main body provided with a drive unit and a power supply pack detachably attached to the main body and provided with a power supply unit serving as a power source for the drive unit. A first power supply pack in which a secondary battery is used as the power supply unit and a second power supply pack in which an electric double-layer capacitor is used as the power supply unit are selectively used as the power supply pack to be attached to the main body.

## Description

### Field of the Invention

The present invention relates to an electric power tool provided with a detachable power source.

### Background of the Invention

As examples of an electric power tool such as an impact tool or drilling tool, there are conventionally available an external power supply type tool, which is provided with a power supply cord connected to an external power source such as a commercial power source when it is in use, and a battery pack type tool provided with a detachable battery pack as a power source.

The external power supply type tool makes use of an external power source such as a commercial power source or the like and therefore can be operated with a higher output power as compared with a case where a secondary battery is used. However, the external power supply type tool cannot be used in an environment where such external power source is not available.

The battery pack type tool is provided with a rechargeable secondary battery and therefore has no need to use an external power source. Accordingly, the battery pack type tool is hardly restrained in performing its operation regardless of the presence or absence of an external power source. However, the battery pack type tool tends to produce a lower output power as compared with a case where an external power source is used.

In this regard, Japanese Patent Application Publication No. 2003-048177 (JP2003-048177A) describes a portable electric power tool provided with an electric storage device as an example of a battery pack type tool which can be operated with a higher power as compared with a case of using a secondary battery.

In this portable electric power tool, the electric storage device includes a secondary battery, a DC/DC converter, an electric double-layer capacitor to which the DC/DC converter is connected, and a charging circuit for charging the electric double-layer capacitor. The electric double-layer capacitor can produce a higher power than the secondary battery; however it tends to have a reduced operation time.

The portable electric power tool has a function of supplying electric power from the secondary battery and a function of supplying electric power from the electric double-layer capacitor to produce a higher power than the secondary battery, and the portable electric power tool is capable of switching the electric power outputted from the electric storage device. In addition, the portable electric power tool has a function of charging the electric double-layer capacitor from the secondary battery in the electric storage device. This function prolongs the time for supplying electric power from the electric double-layer capacitor. Accordingly, in such portable electric power tool, when the electric power is supplied from the electric double-layer capacitor, it is possible to intermittently operate the portable electric power tool with a higher power for a long time as compared with a case where the electric power is supplied from the secondary battery.

In the portable electric power tool described in JP2003-048177A, however, since the electric storage device is provided with the secondary battery, the electric double-layer capacitor and the charging circuit for charging the electric double-layer capacitor, the electric storage device is likely to have a larger-size and a heavier-weight configuration when compared to a conventional battery pack mainly composed of a secondary battery. In the portable electric power tool described in JP2003-048177A, therefore, electric storage device having a larger-size and a heavier-weight may increase the burden of a user in handling the tool.

### Summary of the Invention

In view of the above, the present invention provides an electric power tool capable of operating with an output power higher than an output power produced by a secondary battery and capable of having a small-size and a light-weight configuration.

In accordance with an embodiment of the present invention, there is provided an electric power tool comprising: a main body provided with a drive unit; and a power supply pack detachably attached to the main body and provided with a power supply unit serving as a power source for the drive unit. A first power supply pack in which a secondary battery is used as the power supply unit and a second power supply pack in which an electric double-layer capacitor is used as the power supply unit are selectively used as the power supply pack to be attached to the main body.

Further, the second power supply pack may include a charging route to which the first power supply pack is connected, the charging route serving to charge the electric double-layer capacitor with electric power of the first power supply pack.

With the present invention, it is possible to provide the electric power tool capable of operating with the output power higher than the output power produced by the secondary battery and capable of having the small-size and the light-weight configuration.

### Brief Description of the Drawings

The objects and features of the present disclosure will become apparent from the following description of embodiments given in conjunction with the accompanying drawings, in which:
Fig. 1 is a circuit diagram showing an electric power tool in accordance with an embodiment of the present invention, to which a first power supply pack is attached;
Fig. 2 is a circuit diagram of the electric power tool of the embodiment, to which a second power supply pack is attached;
Fig. 3 is a side view of the electric power tool of the embodiment with the outer shell thereof partially cutaway; and
Fig. 4 is a circuit diagram showing the first power supply pack connected to the second power supply pack.

### Detailed Description of the Embodiments

The present invention will now be described with reference to embodiment shown in the accompanying drawings which form a part hereof.

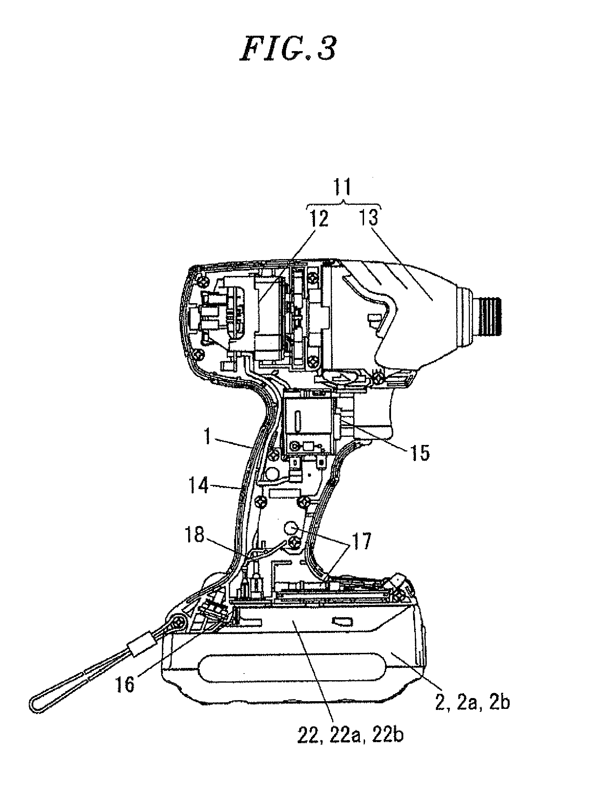

Fig. 3 shows an electric power tool in accordance with an embodiment of the present invention. The electric power tool includes a main body 1 provided with a drive unit 11 and a power supply pack 2 detachably attached to the main body 1. When attached to the main body 1, the power supply pack 2 serves as a power source for the drive unit 11. The drive unit 11 mainly includes a motor 12 as a drive power source and an output unit 13 for outputting the rotary drive power of the motor 12. Electric power is supplied from the power supply pack 2 to the motor 12.

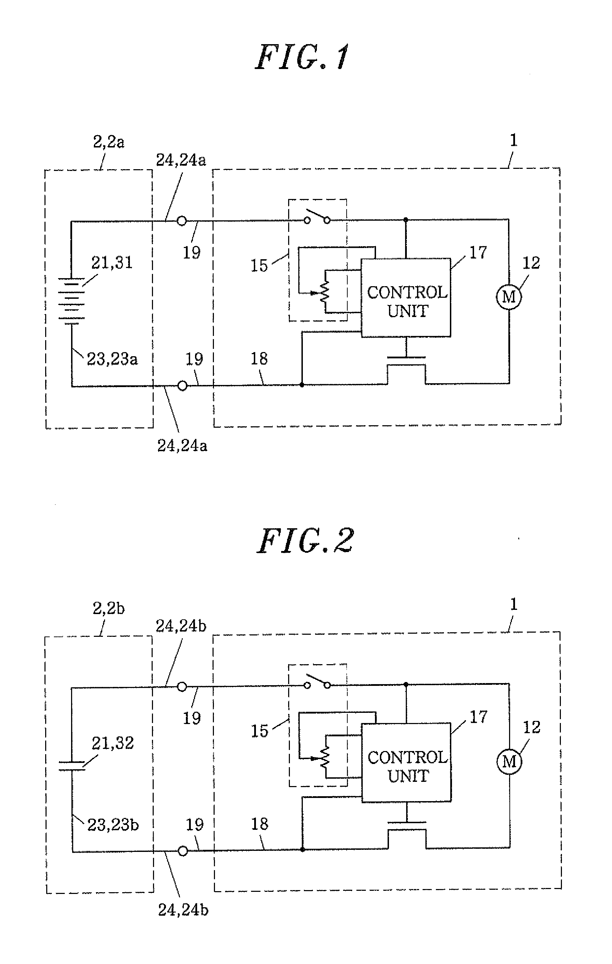

The main body 1 further includes a grip portion 14 for use in gripping the main body 1, an operation unit 15 for use in operating the drive unit 11, a pack mounting portion 16 to which the power supply pack 2 is mounted, and a control unit 17 for controlling the operation of the drive unit 11. As shown in Figs. 1 and 2, the motor 12 (the drive unit 11), the operation unit 15 and the control unit 17 are connected to one another through an electric circuit 18 provided within the main body 1. The electric circuit 18 includes a connection portion 19 for connecting an internal circuit 23 of the power supply pack 2 to the electric circuit 18 when the power supply pack 2 is attached to the main body 1. In the following description, the drive unit 11, the operation unit 15 and the control unit 17 will also be collectively referred to as "the units 11; 15 and 17 ". The term "connection" means electric connection unless specifically mentioned otherwise. In Fig. 3, the control unit 17 is divided into two parts. Alternatively, the control unit 17 may be a single part or may be divided into three or more parts.

The power supply pack 2 includes an attachment portion 22 attached to the pack mounting portion 16, a rechargeable power supply unit 21 serving as a power source for supplying electric power to the units 11; 15 and 17, and an internal circuit 23 connected to the power supply unit 21. The internal circuit 23 is provided with a connection portion 24 to be connected to the connection portion 19. The power supply unit 21 can be charged by connecting the power supply pack 2 to an external power source (not shown) through an external charger (not shown). As a result of this charging operation, the power supply unit 21 can be repeatedly used as a power source for the units 11; 15 and 17.

In the electric power tool, the electric power from the power supply unit 21 can be supplied to the units 11; 15 and 17 by connecting the internal circuit 23 and the electric circuit 18 through the connection portions 19 and 24. In the state that the electric power can be supplied (fed) to the units 11; 15 and 17, the electric power tool switches the supply (feeding) and cutoff of the electric power with respect to the drive unit 11 based on the operation of the operation unit 15. The motor 12 (the drive unit 11) operates at the time of power feeding. In other words, as the attachment portion 22 is attached to the pack mounting portion 16, the internal circuit 23 and the electric circuit 18 are connected to each other through the connection portions 19 and 24, and the power supply unit 21 serves as a power source for the units 11; 15 and 17.

As for the power supply pack 2 of the electric power tool, a first power supply pack 2a in which a secondary battery 31 is used as the power supply unit 21 and a second power supply pack 2b in which an electric double-layer capacitor 32 is used as the power supply unit 21 can be used.

The first power supply pack 2a can be mounted to the main body 1 by attaching the attachment portion 22 (the first attachment portion 22a) to the pack mounting portion 16. When the first power supply pack 2a is in the mounted state, the internal circuit 23 (the first circuit 23a) is connected to the electric circuit 18 through the connection portion 24 (the first connection portion 24a) and the connection portion 19 as shown in Fig. 1. Thus, in this case, the secondary battery 31 serves as a power source for the units 11; 15 and 17. The secondary battery 31 can be charged by attaching the first power supply pack 2a to an external charger and connecting the first circuit 23a to an external power source.

The second power supply pack 2b can be mounted to the main body 1 by attaching the attachment portion 22 (the second attachment portion 22b) to the pack mounting portion 16. When the second power supply pack 2b is in the mounted state, the internal circuit 23 (the second circuit 23b) is connected to the electric circuit 18 through the connection portion 24 (the second connection portion 24b) and the connection portion 19 as shown in Fig. 2. Thus, in this case, the electric double-layer capacitor 32 serves as a power source for the units 11; 15 and 17. The electric double-layer capacitor 32 can be charged by attaching the second power supply pack 2b to an external charger and connecting the second circuit 23b to an external power source.

In the electric power tool of the present embodiment described above, one of the first power supply pack 2a and the second power supply pack 2b is selectively attached to the main body 1, whereby the power supply unit 21 of the power supply pack 2 thus attached can be used as a power source for the units 11; 15 and 17. In other words, the electric power tool of the present embodiment can switch the power source to one of the secondary battery 31 provided in the first power supply pack 2a and the electric double-layer capacitor 32 provided in the second power supply pack 2b, by changing the power supply pack 2 to be attached to the pack mounting portion 16. Accordingly, the first power supply pack 2a and the second power supply pack 2b can be selectively used depending on the kinds of works. This makes it possible to easily enhance the convenience of the electric power tool.

Further, as compared with the secondary battery 31, the electric double-layer capacitor 32 is lighter in weight and more compact, so that the power supply pack 2 can have a small-size and a light-weight configuration. Therefore, as compared with a case where the first power supply pack 2a is used as a power source, when the second power supply pack 2b is used as a power source, it becomes easier for the electric power tool to have the small-size and the light-weight configuration. Accordingly, when the electric power tool is used in a state where the second power supply pack 2b serving as a power source is attached to the main body 1, the burden of a user, e.g., the burden of the hand or arm of the user can be reduced while gripping and using the electric power tool.

Additionally, as compared with the secondary battery 31, the electric double-layer capacitor 32 can produce a higher output power more easily. Therefore, if the second power supply pack 2b is attached to the main body 1, it is possible to easily perform a higher output power work similar to which can be performed by a conventional electric power tool using an external power source. Accordingly, it becomes easier to perform a work requiring a higher output power even under an environment where it is difficult to use an external power source. This makes it possible to easily enhance the convenience of the electric power tool.

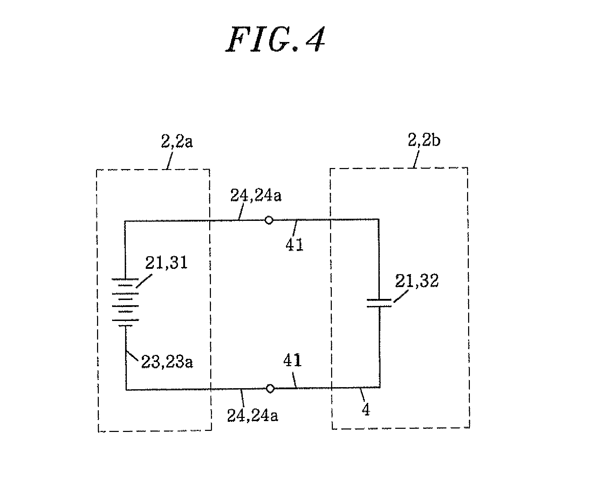

As shown in Fig. 4, the electric power tool of the present embodiment further includes a charging unit for interconnecting the first power supply pack 2a and the second power supply pack 2b. The charging unit is provided in the second power supply pack 2b.

More specifically, the second power supply pack 2b includes a charging route 4 mainly composed of a charging circuit connectable to the first circuit 23a, and a holding portion (not shown) for holding the first power supply pack 2a attached to the second power supply pack 2b.

The charging route 4 is connected to the electric double-layer capacitor 32. The charging route 4 includes a third connection portion 41 to be connected to the first circuit 23a through the first connection portion 24a. The charging unit serves to connect the charging route 4 to the first circuit 23a, so that the electric double-layer capacitor 32 of the second power supply pack 2b can be charged with the electric power from the secondary battery 31 (the power supply unit 21 of another power supply pack 2) arranged in the first power supply pack 2a.

In this manner, the electric double-layer capacitor 32, relatively smaller in electric capacity than the secondary battery 31, can be charged by the first power supply pack 2a. This makes it possible that the second power supply pack 2b can serve as the power supply pack 2 that is substantially equal in electric capacity to the first power supply pack 2a. Accordingly, it is possible to continuously perform a work through the use of the second power supply pack 2b without having to perform charging with an external power source. It is also possible to restrain an increase in size and weight and to increase a work amount performed with the second power supply pack 2b. In other words, if the second power supply pack 2b chargeable with the first power supply pack 2a is used as a power source for the units 11; 15 and 17, it is possible to provide a small-size and a light-weight electric power tool capable of performing a work with substantially the same electric capacity as that of the first power supply pack 2a.

In the event that a higher output power work is to be performed, e.g., under an environment where it is difficult to use an external power source, it becomes possible to perform the work by repeatedly using the second power supply pack 2b if the second power supply pack 2b can be charged with the first power supply pack 2a. Accordingly, in case of performing a higher output power work, it is less likely that the workability is reduced by, e.g., the winding of a power supply cord to be connected to an external power source. It is therefore possible to easily enhance the convenience of the electric power tool.

Further, the charging unit (the charging route 4) is provided in the second power supply pack 2b. Therefore, when a conventional battery pack having a secondary battery as a power source is used as the first power supply pack 2a, it is possible to charge the electric double-layer capacitor 32 with the conventional battery pack. Accordingly, when a work is performed with a plurality of electric power tools, the second power supply pack 2b can be charged by the battery pack of another electric power tool already used in other works. This makes it possible to continuously perform the work by using the second power supply pack 2b. It is therefore possible to easily enhance the workability and convenience.

The present invention is not limited to the configuration of the present embodiment. The present embodiment may be subjected to an appropriate design change without departing from the scope of the present invention. For example, the second circuit 23b may serve as the charging route 4. The second connection portion 24b may serve as the third connection portion 41. In that case, the second power supply pack 2b may include a detection unit for detecting the attachment of the first power supply pack 2a such that the second circuit 23b serves as the charging route 4 when the attachment of the first power supply pack 2a is detected. As another example, the second power supply pack 2b may include a detection unit for detecting the attachment of the second power supply pack 2b to the main body 1. In this case, the second circuit 23b serves as the power supply unit 21 when the attachment of the second power supply 2b to the main body 1 is detected (that is, the electric double-layer capacitor 32 may not serve as the power supply unit 21 when the attachment of the second power supply 2b to the main body 1 is not detected).

Further, the charging unit is not limited to the configuration in which all the components are provided in the second power supply pack 2b, but may have a configuration in which at least the charging route 4 is provided in the second power supply pack 2b. For example, the first power supply pack 2a may further include, in addition to the first circuit 23a, a power feeding route that is connected to the charging route 4 in the second power supply pack 2b to feed electric power from the secondary battery 31 to the electric double-layer capacitor 32. As another example, the charging unit may further include an interconnection member detachably attached to the power supply pack 2, e.g., an interconnector or a connection cord for connecting the first power supply pack 2a to the second power supply pack 2b (the charging route 4).

While the invention has been shown and described with respect to the embodiments, it will be understood by those skilled in the art that various changes and modification may be made without departing from the scope of the invention as defined in the following claims.

## Claims

1. An electric power tool comprising:
a main body provided with a drive unit; and
a power supply pack detachably attached to the main body and provided with a power supply unit serving as a power source for the drive unit,
wherein a first power supply pack in which a secondary battery is used as the power supply unit and a second power supply pack in which an electric double-layer capacitor is used as the power supply unit are selectively used as the power supply pack attached to the main body.

2. The electric power tool of claim 1, wherein the second power supply pack includes a charging route to which the first power supply pack is connected, the charging route serving to charge the electric double-layer capacitor with electric power of the first power supply pack.
